# EUROPÄISCHE PATENTSCHRIFT

(11) **EP 2 383 101 B1**
(45) Veröffentlichungstag und Bekanntmachung des Hinweises auf die Patenterteilung: **09.08.2017**
(21) Anmeldenummer: 11159015.4
(22) Anmeldetag: 21.03.2011
(51) Int. Cl.: B29C 49/42, B29C 49/78, B29C 49/48, B29C 49/12, B29L 31/00, B29C 49/10, B29C 49/36

(54) **Blasmaschine**
Blow molding machine
Dispositif de moulage par soufflage

(30) Priorität: 27.04.2010 DE 102010028253
(43) Veröffentlichungstag der Anmeldung: 02.11.2011
(73) Patentinhaber: Krones AG, 93073 Neutraubling (DE)
(72) Erfinder: Höllriegl, Thomas, 93158 Teublitz (DE); Brunner, Andreas, 93089 Aufhausen (DE); Finger, Dieter, 93073 Neutraubling (DE); Geltinger, Florian, 93093 Donaustauf (DE); Fleischmann, Hans-Jürgen, 92449 Steinberg am See (DE); Schneider, Helmut, 93055 Regensburg (DE)
(74) Vertreter: Grünecker Patent- und Rechtsanwälte PartG mbB

(56) Entgegenhaltungen:
- DE-A1-102008 012 757
- DE-U1- 20 309 576
- US-A- 5 851 570
- US-A- 6 146 134
- US-A1- 2010 078 861

## Beschreibung

Die Erfindung betrifft eine Blasmaschine gemäß des Oberbegriffs des Patentanspruchs 1.

In Blasmaschinen, insbesondere Streckblasmaschinen, wurden früher Sekundärfunktionen, wie beispielsweise die Reckstangenbewegungen oder Relativbewegungen anderer Komponenten durch Kurvensteuerungen, gegebenenfalls kombiniert mit Pneumatikzylindern, gesteuert. Neuere Entwicklungen von Blasmaschinen gehen von diesem althergebrachten Prinzip ab und enthalten funktionelle Ausstattungskomponenten, die zumindest elektrische Servomotoren zum Steuern solcher Sekundärfunktionen, typischerweise Frequenzumrichter-Servomotoren umfassen, wobei auch Frequenzumrichter und/oder Steuer- und Überwachungseinrichtungen elektrischer oder elektronischer Bauweise an oder in den Blasstationen vorgesehen sein können. Speziell moderne elektrische Servomotoren bringen bei kompakter Bauweise ausreichende Leistung und ermöglichen eine sehr feinfühlige Bewegungssteuerung, und falls erforderlich, individuelle Steuerungsabläufe z.B. in den Blasstationen. Solche Antriebssysteme mit elektrischen Servomotoren können in der Blasmaschine auch für andere Sekundärfunktionen außerhalb der Blasstationen vorgesehen sein, z.B. in einem stehenden Teil der Blasmaschine. Jedoch ist allgemein, z.B. in Blasmaschinen speziell bei den Blasstationen, die Temperaturbelastung hoch und erzeugen sowohl elektrische Servomotoren als auch elektronische oder elektrische Steuereinrichtungen und Antriebsvorrichtungen wie Frequenzumrichter im Produktionsbetrieb nennenswerte Wärme oder wird in diese funktionellen Ausstattungskomponenten aufgrund eines hohen Temperaturniveaus Wärme eingekoppelt. Die funktionellen Ausstattungskomponenten benötigen jedoch zum störungsfreien Betrieb und für lange Standzeiten bestimmte Betriebstemperaturen. Dies gilt sowohl für Blasmaschinen, in denen die Blasstationen in einem drehenden Teil angeordnet sind, als auch für Blasmaschinen mit stationär angeordneten Blasstationen.

EP 1 061 649 A offenbart eine Streckblasmaschine mit stationären Blasstationen, wobei als funktionelle Ausstattungskomponenten für die Sekundärfunktion des Reckens elektrische Servomotoren für die Blasstationen installiert sind, die die Reckstangenbewegung über Zahnriemen steuern und denen in den Blasstationen Steuereinheiten zugeordnet sind.

WO 2006/108380 A betrifft eine Streckblasmaschine mit einem Blasrad als drehendem Teil, an dem die Blasstationen und als funktionelle Ausstattungskomponenten für Sekundärfunktionen wie die Reckstangenbewegungssteuerung elektrische Linearmotoren kombiniert mit Fluidantrieben vorgesehen sind.

DE 10 2008 012 757 A offenbart eine Streckblasmaschine mit Blasstationen in einem drehenden Teil. Der drehende Teil ist ein Blasrad, das z.B. auf einer Plattform im stehenden Teil gelagert ist und in das über eine Drehdurchführung Medienverbindungen verlaufen. In den Blasstationen sind elektrische Servomotoren, typischerweise Frequenzumricht-Linearmotoren, mit Frequenzumrichtern und jeweils eine elektronische Steuereinheit pro Blasstation installiert. Jede elektrische Steuereinheit steuert nicht nur die Reckstangenbewegung, sondern auch Blasluft-Ventile.

Von Interesse sind ferner:
DE 203 09 576 U1,
US 2010/078861 A1,
US 6 146 134 A,
US 5 851 570 A.

Schließlich ist es bei Streckblasmaschinen mit an einem Blasrad angeordneten Blasstationen aus der Praxis bekannt, insbesondere für die Blasformen, ein Primärfunktions-Flüssigkeits-Temperiersystem zu installieren, das über eine Drehdurchführung an eine externe Flüssigkeitsversorgung angeschlossen ist. Mehrere getrennte Vorläufe und Rückläufe für Formschalen und Bodenformen erstrecken sich von der Drehdurchführung zu sämtlichen Blasformen. Das Temperaturniveau wird jeweils im stehenden Teil oder außerhalb der Streckblasmaschine eingestellt, geregelt und überwacht. In das Primärfunktions-Temperiersystem ist ein Heizmodul integriert, der z.B. zum Temperieren der Preforms vor deren Übergabe an die Blasformen dient.

Der Erfindung liegt die Aufgabe zugrunde, eine Blasmaschine der eingangs genannten Art zu schaffen, die aufgrund einer optimierten Wärmebilanz von funktionellen Ausstattungskomponenten für Sekundärfunktionen im Produktionsbetrieb mit hoher Prozess- und Betriebssicherheit über lange Standzeiten arbeitet.

Die gestellte Aufgabe wird mit den Merkmalen des Patentanspruchs 1 gelöst.

Unabhängig davon, ob die funktionellen Ausstattungskomponenten für Sekundärfunktionen im Produktionsbetrieb Wärme generieren oder durch Wärmeeinkopplung aus der Umgebung aufgeheizt oder durch lokal kühle Umgebungsbedingungen zu stark abgekühlt werden, lässt sich mittels des Flüssigkeits-Temperiersystems für jede darin integrierte funktionelle Ausstattungskomponente eine weitgehend optimale und individuelle Betriebstemperatur einstellen und halten. Dies trägt zur Prozesssicherheit bei und steigert die Betriebssicherheit der Blasmaschine im Produktionsbetrieb. Bevorzugt handelt es sich dabei um funktionelle Ausstattungskomponenten wie elektrische Servomotoren, deren Antriebseinrichtungen mit Frequenzumrichtern, elektrische oder elektronische Steuereinheiten und andere Antriebsteile.

Bei einer zweckmäßigen Ausführungsform weist das Flüssigkeits-Temperiersystem für die funktionellen Ausstattungskomponenten von Sekundärfunktionen andere kombinierte Temperaturkreisläufe auf, von denen zumindest zwei im Produktionsbetrieb mit unterschiedlichen Temperaturniveaus betreibbar sind, so dass durch die Auswahl des jeweiligen Temperierkreislaufes für die darin integrierten funktionellen Ausstattungskomponenten deren optimale Betriebstemperaturen einsellbar und haltbar sind.

Bei einer zweckmäßigen Ausführungsform ist das Flüssigkeits-Temperiersystem der funktionellen Ausstattungskomponenten von Sekundärfunktionen mit dem Primärfunktions-Temperiersystem der Blasformen kombiniert. Daraus resultieren bauliche Vereinfachungen in der Blasmaschine und sind, ausgehend von gegebenenfalls nur einer Versorgung, dennoch die erforderlichen unterschiedlichen Temperaturniveaus einstellbar. Ferner kann der für die Ausstattungskomponenten derselbe Wärmeträger, beispielsweise Wasser, manchmal versetzt mit Zusatzstoffen, oder Öl, verwendet werden.

Obwohl das erfindungsgemäße Prinzip auch bei einer Blasmaschine mit stationären Blasstationen anwendbar ist, weist bei einer bevorzugten Ausführungsform die Blasmaschine einen im Produktionsbetrieb stehenden Teil und wenigstens einen relativ zum stehenden Teil drehenden Teil mit den Blasstationen auf, vorzugsweise ein Blasrad. Den zu temperierenden funktionellen Ausstattungskomponenten zumindest in den Blasstationen sind im drehenden Teil gemeinsame Temperierkreisläufe des Flüssigkeits-Temperiersystems zugeordnet. Dies schließt jedoch nicht aus, wie im drehenden Teil, den im stehenden Teil angeordneten Temperierkreisläufen für dort angeordnete funktionelle Ausstattungskomponenten von Sekundärfunktionen eine gemeinsame Versorgung bzw. einen gemeinsamen Vorlauf und Rücklauf zuzuordnen.

Bei einer zweckmäßigen Ausführungsform ist das Temperiergerät außerhalb der Blasmaschine oder im stehenden Teil oder im drehenden Teil angeordnet und mit den Temperierkreisläufen über nur einen Vorlauf und nur einen Rücklauf verbunden. Die Temperaturniveau-Einstellung erfolgt in den Temperierkreisläufen.

Wie erwähnt, kann auch im stehenden Teil wenigstens ein Temperierkreislauf für dort angeordnete funktionelle Ausstattungskomponenten vorgesehen werden, der, vorzugsweise entweder an das Temperiergerät oder an Vorlauf und Rücklauf angeschlossen ist und gegebenenfalls mit wenigstens einem individuellen Temperaturniveau betreibbar ist.

Bei einer weiteren Ausführungsform ist das außerhalb der Blasmaschine oder im stehenden Teil angeordneten Temperiergerät über eine Drehdurchführung zwischen dem stehenden und dem drehenden Teil mit dem zumindest einen Temperierkreislauf im drehenden Teil verbunden. Durch die Drehdurchführung verläuft ein Vorlauf und ein Rücklauf, aus dem die gegebenenfalls mehreren Temperierkreisläufe im drehenden Teil gespeist werden. Die Drehdurchführung kann eine separate Drehdurchführung sein, oder ist eine ohnedies zur Temperierung der Blasformen vorgesehene Flüssigkeits-Drehdurchführung. Alternativ kann für diesen Zweck auch eine vorgesehene Druckluft-Drehdurchführung verwendet werden oder sogar eine kombinierte Flüssigkeits-/Druckluft-Drehdurchführung zwischen dem drehenden und dem stehenden Teil. Die Nutzung einer bereits aus anderen Gründen vorgesehenen Drehdurchführung vereinfacht die Installation des Flüssigkeits-Temperiersystems. Die Drehdurchführung kann oberhalb oder unterhalb eines Tragringrandes vorgesehen sein.

Bei einer zweckmäßigen Ausführungsform ist das einschließlich des Temperiergeräts im drehenden Teil für alle funktionellen Ausstattungskomponenten von Sekundärfunktionen gemeinsame Flüssigkeits-Temperiersystem bezüglich der Wärmeträgerflüssigkeit, z. B. Wasser oder Öl, autark ausgebildet. Das heißt, das Flüssigkeits-Temperiersystem kommt zumindest im Produktionsbetrieb der Blasmaschine ohne Flüssigkeitsversorgung von außen aus. Vorzugsweise erfolgt jedoch zumindest die Versorgung mit elektrischer Betriebsspannung und/oder elektrischen Signalen über eine Schleifringanordnung zwischen drehendem und stehendem Teil der Blasmaschine.

Bei einer zweckmäßigen Ausführungsform umfassen funktionelle Ausstattungskomponenten für Sekundärfunktionen neben elektrischen Servomotoren in Form von Frequenzumricht-Drehmotoren und/oder -Linearmotoren zumindest elektrische oder elektronische Steuereinrichtungen und Antriebseinrichtungen und/oder Gehäuse oder Schaltkästen für diese und/oder wenigstens ein Klimagerät innerhalb eines Temperierkreislaufs und/oder in Vorlauf oder Rücklauf zur lokalen Zusatztemperierung der Flüssigkeit und/oder Kühlelemente, wie Rückwandkühlkörper, für Frequenzumrichter und/oder einen Plattformbereich im stehenden oder drehenden Teil und dergleichen. Jede funktionelle Ausstattungskomponente ist mit Einlass- und Auslassanschlüssen zum Installieren im jeweiligen Temperierkreislauf versehen. Mehrere funktionelle Ausstattungskomponenten können entweder in Serie oder parallel oder kombiniert in Serie und parallel in den jeweiligen Temperierkreislauf eingegliedert sein, wobei gegebenenfalls funktionelle Ausstattungskomponenten mit stärkerem Kühl- oder Wärmebedarf stromauf von anderen mit geringerem Kühl- oder Wärmebedarf platziert werden.

Bei einer weiteren Ausführungsform sind Frequenzumrichter und/oder Steuereinrichtungen der Servomotoren von den Servomotoren baulich separiert, um hier eine gegenseitige Wärmeeinkopplung weitestgehend auszuschließen, und gegebenenfalls sogar entweder einzeln oder gruppenweise oder gemeinsam in wenigstens einen Temperierkreislauf eingegliedert. Ein Klimagerät in wenigstens einem Temperierkreislauf bzw. Rücklauf wird beispielsweise elektrisch betrieben und entzieht dem Temperierkreislauf oder dem Rücklauf Wärme und führt diese in die Außenumgebung ab, oder sammelt Wärme aus der Außenumgebung und führt diese z.B. in den Vorlauf ein. Gegebenenfalls ist das Klimagerät nach Art eines Wärmetauschers verschaltet, der entzogene Wärme in ein anderes Temperiersystem einspeist, beispielsweise in das Blasformen-Temperiersystem.

Bei einer weiteren, zweckmäßigen Ausführungsform wird die Wärmebilanz funktioneller Ausstattungskomponenten für Sekundärfunktionen auf baulich einfache Weise dadurch flankierend verbessert, dass zumindest eine funktionelle Ausstattungskomponente mit kühlender gezielter Luftströmung beaufschlagbar ist, und hierfür mit für die Temperierung durch Luftströmung beaufschlagbaren Kühlmerkmalen, wie Kühlrippen oder Coldplates, ausgebildet ist. Die Luftströmung kann vom stehenden Teil her durch beispielsweise Gebläse auf die funktionelle Ausstattungskomponente einwirken oder wird aus der relativen Drehbewegung des drehenden Teils abgeleitet und auf die funktionelle Ausstattungskomponente gerichtet, und/oder durch Zuleiten von in Blasstationen im Produktionsbetrieb ausgestoßener, durch Expansion gekühlter Blasluft erzeugt.

Bei einer zweckmäßigen Ausführungsform ist in einem an Vorlauf und Rücklauf angeschlossenen Haupt-Temperierkreislauf wenigstens eine Zirkulationspumpe, stromauf der Zirkulationspumpe zwischen Vorlauf und Rücklauf eine Bypassverbindung, und im Vorlauf und Rücklauf wenigstens ein elektrisch betätigbares Mischventil angeordnet. Zumindest der Haupt-Temperierkreislauf wird ähnlich betrieben wie eine moderne Gebäudeheizung, indem das Mischventil aus Vorlauf oder Rücklauf den Temperierkreislauf auf das gewünschte Temperaturniveau regelt, wobei das Mischventil nicht nur Auf/Zu-Stellungen einnehmen kann, sondern gegebenenfalls auch eine Strömungsratensteuerungs- bzw. -regelung vornimmt und/oder im Taktbetrieb arbeitet.

Bei einer konkreten Ausführungsform ist im Rücklauf stromab der Bypassverbindung ein Zweiwege-Mischventil mit elektrischem Stellmotor, wie einem Stellmagneten, angeordnet und z.B. zumindest über einen Sensor steuerbar, der stromab der Zirkulationspumpe angeordnet werden kann. Bei dem Sensor kann sich entweder um einen Temperatursensor oder einen Drucksensor oder einen Strömungsratensensor handeln. Der jeweilige Sensor kann auch zur Überwachung oder für Diagnosezwecke herangezogen werden. Das Zweiwege-Mischventil im Rücklauf regelt, z.B. nach Maßgabe des Sensors, welche Strömungsrate zum Temperiergerät durchgelassen bzw. welche Strömungsrate vom Temperiergerät von der Zirkulationspumpe angesaugt wird.

Bei einer anderen Ausführungsform ist im Vorlauf stromauf der Zirkulationspumpe in einem Knoten zwischen Vorlauf und Bypassverbindung ein Dreiwege-Mischventil mit Stellmotor angeordnet. Hierbei regelt das Dreiwege-Mischventil die Strömungsraten im Vorlauf und in der Bypassverbindung.

Bei einer zweckmäßigen Ausführungsform ist der Haupttemperierkreislauf über wenigstens eine funktionelle Ausstattungskomponente, wie z. B. einen elektrischen Servomotor oder dessen Frequenzumrichter, vorzugsweise sogar über mehrere, zum Temperieren in Reihe und/oder parallel geschaltete funktionelle Ausstattungskomponenten und stromab davon über das Blasrad oder eine Kühl- oder Heizstrecke im Blasrad geführt. Die Ausstattungskomponenten erhalten ein niedrigeres Temperaturniveau als das Blasrad, das vorwiegend durch Wärmeeinkopplung aufgeheizt wird und ein höheres Betriebstemperaturniveau verträgt als gegebenenfalls die funktionellen Ausstattungskomponenten für Sekundärfunktionen.

Bei einer zweckmäßigen Ausführungsform zweigt vom Haupttemperierkreislauf stromab der Zirkulationspumpe ein Nebentemperierkreislauf zu wenigstens einem Schaltschrank, Kühlkörper, Servomotor oder Frequenzumrichter ab, vorzugsweise sogar zu mehreren parallel und/oder in Reihe geschalteten Verbrauchern. Der Nebentemperierkreislauf kann mit einem vom Haupttemperierkreislauf unterschiedlichen Temperaturniveau betrieben werden, und/oder mit geringerer Strömungsrate. Ein Nebentemperierkreislauf könnte zusätzlich wie der Haupttemperierkreislauf ausgestattet sein, z.B. mit Zirkulationspumpe und/oder Mischventil und/oder wenigstens einem Sensor.

Zweckmäßig ist das Flüssigkeits-Temperiersystem mittels wenigstens einer, vorzugsweise programmierbaren, Zentralsteuereinheit betreibbar, vorzugsweise entweder zum geregelten Kühlen oder geregeltem Heizen. Die Zentralsteuereinheit ist zweckmäßig im stehenden Teil oder sogar außerhalb der Blasmaschine angeordnet, so dass im Produktionsbetrieb der Blasmaschine Parametrierungen jederzeit vorgenommen werden können. Die Zentralsteuereinheit kann mit entsprechenden Sensoren im Vorlauf, Rücklauf, dem Temperiergerät, und Komponenten der Temperierkreisläufe elektrisch verbunden sein, um jederzeit Informationen über die Temperaturniveaus zu haben und gegebenenfalls auch Diagnosezyklen ausführen zu können.

Bei einer zweckmäßigen Ausführungsform ist in einer Blasstation jeweils ein elektrischer Servo-Linearmotor als Reckstangen-Direktantrieb vorgesehen. Der Servo-Linearmotor weist am Stator z.B. einen Kühlmantel mit Einlass- und Ablaufanschlüssen zum Installieren in einem Temperierkreislauf auf und wird in dem Temperierkreislauf temperiert. Alternativ oder additiv kann der Stator auf oder in einem in den gleichen oder einen anderen Temperierkreislauf integrierten Kühlkörper montiert sein, der die Temperierung des Servo-Linearmotors unterstützt oder durchführt. Im letztgenannten Fall lässt sich gegebenenfalls ein Standard-Servo-Linearmotor ohne Kühlmantel verwenden.

Anhand der Zeichnungen werden Ausführungsformen des Erfindungsgegenstandes erläutert. Es zeigen:
- Fig. 1: eine Schemadraufsicht auf ein Ausführungsbeispiel einer Blasmaschine,
- Fig. 2: ein Blockschaltbild eines Flüssigkeits-Temperiersystems, beispielsweise der Blasmaschine von Fig. 1,
- Fig. 3: eine andere Ausführungsform eines Flüssigkeits-Temperiersystems, beispielsweise für die Blasmaschine von Fig. 1, und
- Fig. 4: eine perspektivische Teilschnittdarstellung eines Reckstangen-Antriebssystems mit einem elektrischen Servo-Linearmotor als Direktantrieb einer Reckstange.

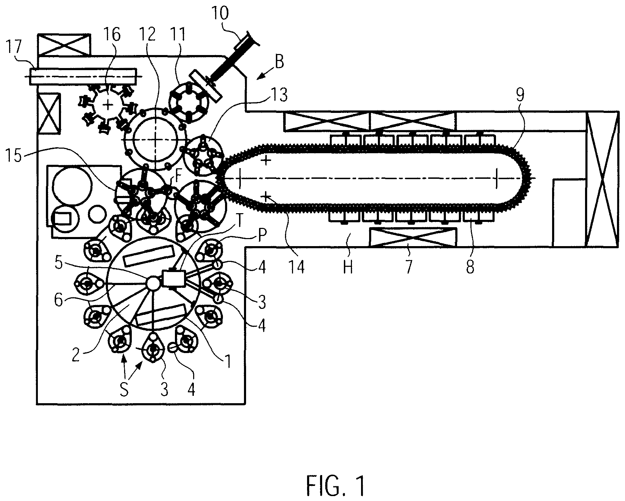

Fig. 1 zeigt als Schemadraufsicht eine Auslegung einer Blasmaschine B, insbesondere einer Streckblasmaschine, zum kontinuierlichen Herstellen von Behältern F aus Preforms P, beispielsweise aus PET, in der Getränkeabfüllindustrie. In Fig. 1 weist die Blasmaschine B als drehenden Teil 1 ein auf einer nicht näher hervorgehobenen Plattform eines stehenden Teils 2 drehangetriebenes Blasrad mit mehreren umfangsseitig angeordneten Blasstationen S jeweils mit mindestens einer geteilten Blasform 3 auf.

Das erfindungsgemäße Prinzip ist jedoch gleichermaßen in Blasmaschinen, insbesondere Streckblasmaschinen, anwendbar, in denen die Blasstationen stationär angeordnet sind. Ferner ist in Fig. 1 angedeutet, dass die hergestellten Behälter F an einen Abförderer 17 aus der Blasmaschine B abgefördert werden, was jedoch nicht ausschließen soll, in die Blasmaschine weitere Behälterbehandlungseinrichtungen zu integrieren, wie beispielsweise Sterilisierstationen, Etikettierstationen, Spülstationen, Füllstationen und/oder dergleichen.

Zwischen dem drehenden Teil 1 in Fig. 1 und dem stehenden Teil 2 ist eine Drehdurchführung 5 vorgesehen, die beispielsweise dazu dient, ein Primärfunktions-Flüssigkeits-Temperiersystem 6 für die Blasformen 3 aus dem stehenden Teil 2 zu speisen bzw. ein Primärfunktions-Temperiersystem im stehenden Teil 2 oder außerhalb der Blasmaschine B mit den Blasformen 3 im Produktionsbetrieb zu verbinden. Typischerweise werden Formschalen der geteilten Blasformen 3 mit einem anderen Temperaturniveau temperiert als beispielsweise eine Bodenform, wofür entsprechend mehrere Rückläufe und Vorläufe von der Drehdurchführung 5 zu den Blasformen 3 installiert sind (nicht gezeigt).

Den Blasstationen S sind jeweils funktionelle Ausstattungskomponenten 4, typischerweise elektrische Servomotoren, für Sekundärfunktionen, wie beispielsweise die Steuerung von Bewegungen einer Reckstange im Produktionsbetrieb (nicht gezeigt) zugeordnet. Dabei handelt es sich typischerweise um Frequenzumricht-Servomotoren mit Frequenzumrichtern und bei den Blasstationen angeordnete Steuer- und Überwachungseinheiten. In diesen funktionellen Ausstattungskomponenten für Sekundärfunktionen wird im Produktionsbetrieb entweder Wärme generiert und/oder durch Wärmeeinkopplung Wärme in diese eingebracht, oder diesen gegebenenfalls sogar aufgrund lokaler kühler Umgebungsbedingungen Wärme entzogen.

Um die funktionellen Ausstattungskomponenten 4 über lange Standzeiten im Produktionsbetrieb auf optimalen Betriebstemperaturen zu halten oder auf diese zu bringen, ist erfindungsgemäß in die Blasmaschine B ein Flüssigkeits-Temperiersystem T vordringlich für funktionelle Ausstattungskomponenten 4 eingegliedert. In der Ausführungsform in Fig. 1 ist zumindest ein erheblicher Teil des Flüssigkeits-Temperiersystems T im drehenden Teil 1 mit diesem mitdrehend angeordnet und beispielsweise über einen Vorlauf und einen Rücklauf über die Drehdurchführung 5 an eine im stehenden Teil 2 oder außerhalb der Blasmaschine B angeordnete zentrale Versorgung angeschlossen. Alternativ (in Fig. 1 nicht gezeigt) könnte das elektrisch betriebene Flüssigkeits-Temperiersystem T einschließlich wenigstens eines Temperiergeräts im drehenden Teil 1 bezüglich der Flüssigkeit autark betrieben werden, d. h. ohne Anschluss an die Drehdurchführung 5 und vom stehenden Teil 2 her z.B. über eine Schleifringanordnung mit Betriebsspannung oder elektrischen Signalen versorgt oder gesteuert werden.

In der in Fig. 1 gezeigten Blasmaschine ist ein Heizmodul H zum Temperieren der Preforms P eingegliedert, der eine Steuereinrichtung 7 und Heizeinrichtungen 8 entlang eines Endlos-Förderelements 9 aufweist. Die Preforms P werden hier beispielsweise in kaltem Zustand durch einen Zuförderer 10 an einen Zuführstern 11 mit Übergabearmen geliefert, und von diesem an einen Transferstern 12, der die Preforms beispielsweise im Mündungsbereich greift und an einen Übergabestern 13 mit Übergabearmen übergibt, der das Förderelement 9 beschickt. Vom Förderelement 9 werden die temperierten Preforms P an einen Übergabestern 14 mit Transferarmen übergeben, der diese einzeln in die zu diesem Zweck geöffneten Blasformen 3 transferiert. Jeder Preform wird in der geschlossenen Blasform durch eine nicht gezeigte Reckstange gereckt und durch Druckluftbeaufschlagung blasgeformt, während der drehende Teil 1 rotiert. Die fertigen Behälter F, typischerweise Flaschen, werden dann von einem Transferstern 15 mit Transferarmen einzeln aus den geöffneten Blasformen 3 entnommen und über in diesem Fall denselben Transferstern 12 an ein Abnahmerad 16 geliefert, das den Abförderer 17 beschickt. Der Transferstern 12 wird hier für beide Funktionen eingesetzt, da die Mündungsbereiche der Preforms P und der Behälter F im Wesentlichen gleich sind. Es wäre aber möglich, einen anderen Transferstern 12 für die blasgeformten Behälter F vorzusehen.

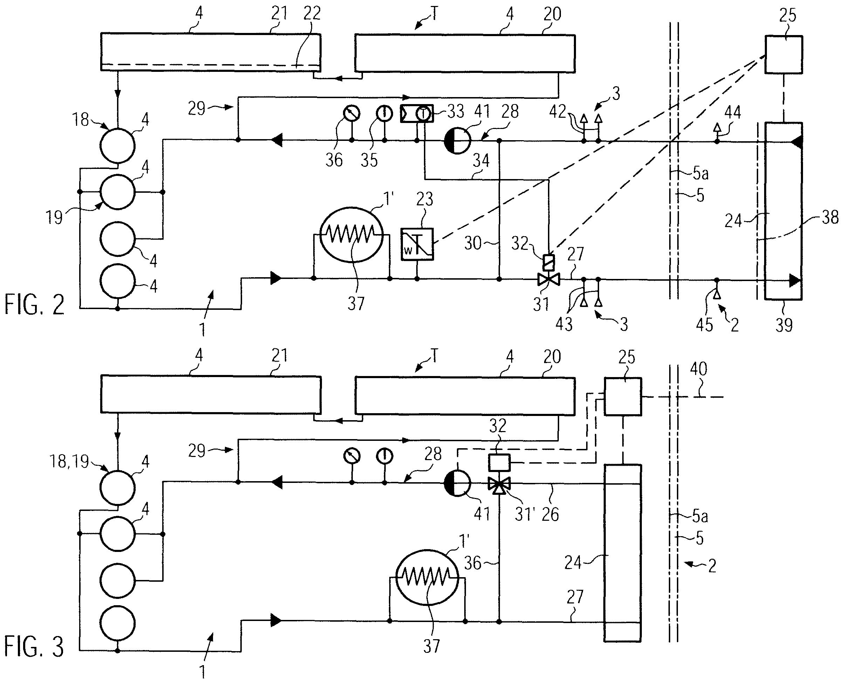

Fig. 2 verdeutlich ein Flüssigkeits-Temperiersystem T für funktionelle Ausstattungskomponenten 4 von Sekundärfunktionen beim Blasformprozess, dessen Primärfunktion beispielsweise die Blasdrucksteuerung ist. Ein Temperiergerät 24 zum Temperieren eines flüssigen Wärmeträgers (Wasser oder Öl) ist hier außerhalb des drehenden Teils 1 entweder im stehenden Teil 2, getrennt durch die Drehdurchführung 5, angeordnet, oder sogar (angedeutet durch die strichpunktierte Trennlinie 38) außerhalb des stehenden Teils 2 bzw. sogar außerhalb der Blasmaschine B. Vom Temperiergerät 24 (zum wahlweisen Erwärmen oder Kühlen der Flüssigkeit) erstreckt sich ein Vorlauf 26 über die Drehdurchführung 5 zu einem Haupt-Temperierkreislauf 28 im drehenden Teil 1. Vom Haupt-Temperierkreislauf 28 zweigt ein Neben-Temperierkreislauf 29 ab. Eine Bypassverbindung 30 verbindet im Haupttemperierkreislauf 28 den Vorlauf 26 und einen Rücklauf 27, der über die Drehdurchführung 5 zum Klimagerät 24 verläuft. Das Klimagerät 24 ist beispielsweise mit einer Zentralsteuereinheit 25 (mit nicht gezeigter Parametrierungssektion) verbunden. Stromab der Bypassverbindung 30 ist im Haupttemperierkreislauf 28 eine elektrisch betriebene Zirkulationspumpe 41 (gegebenenfalls eine drehzahlregelbare Pumpe) angeordnet. Im Rücklauf 27 ist stromab der Bypassverbindung 30 ein Zweiwege-Mischventil 31 mit einem elektrischen Stellmotor 32, beispielsweise einem Stellmagneten, installiert und über eine Steuerleitung 34 mit einem Sensor oder Geber 33 verbunden, der zumindest die Temperatur im Haupt-Temperierkreislauf 28 stromab der Zirkulationspumpe 41 abgreift und das Zweiwege-Mischventil 31 entsprechend betätigt. Ferner kann stromab der Zirkulationspumpe 41 im Haupt-Temperierkreislauf 28 ein Temperatursensor 35 und/oder ein Drucksensor 36 angeordnet sein. Die Sensoren können, vorzugsweise, signalübertragend mit der Zentralsteuereinheit 25 verbunden sein, wie auch gegebenenfalls der Stellmotor 32 des Zweiwege-Mischventils 31 und ein hier im Haupt-Temperierkreislauf 28 (gegebenenfalls im Rücklauf 27) angeordnetes Klimagerät 23. Im Haupt-Temperierkreislauf 28 sind als funktionelle Ausstattungskomponenten 4 beispielsweise mehrere elektrische Servomotoren (oder deren Frequenzumrichter) angeordnet, beispielsweise ein Servo-Linearmotor 19 eines Reckstangenantriebs und hier zumindest zwei weitere Servomotoren, die in Reihe geschaltet sind. Stromab der letzten funktionellen Ausstattungskomponente 4 im Haupt-Temperierkreislauf 28 ist eine Heiz- oder Kühlstrecke 37 im Blasrad 1' angeschlossen und stromab dessen das Klimagerät 23.

Das Klimagerät 23 dient beispielsweise dazu, Wärme aus der Flüssigkeit zu entziehen und beispielsweise in die Umgebung abzublasen, oder auch Wärme zu sammeln und in den Haupt-Temperier-Kreislauf 28 einzuspeisen, um eine lokale zusätzliche Temperierung vorzunehmen. Die hauptsächliche Temperierung der Flüssigkeit kann im Temperiergerät 24 erfolgen. Gegebenenfalls wird vom Klimagerät 23 (z.B. verschaltet als Wärmetauscher) entzogene Wärme zum Beheizen anderer Ausstattungskomponenten im drehenden Teil 1 verwendet.

Vom Haupt-Temperier-Kreislauf 28 zweigt in Fig. 2 ein Neben-Temperierkreislauf 29 ab, der in der gezeigten Ausführungsform über drei funktionelle Ausstattungskomponenten 4 geführt ist und stromauf der Strecke 37 wieder in den Haupt-Temperierkreislauf 28 mündet. Die Temperier-Kreisläufe 28, 29 können mit unterschiedlichen Temperaturniveaus und/oder unterschiedlichen Strömungsraten betrieben werden. Im Neben-Temperier-Kreislauf 29 ist beispielsweise die erste funktionelle Ausstattungskomponente 4 ein Schaltschrank mit einer elektrischen oder elektronischen Steuerung 20. Die nächstfolgende funktionelle Ausstattungskomponente 4 ist beispielsweise ein Schaltschrank mit einem oder mehreren Frequenzumrichtern 21 oder direkt ein oder mehrere Frequenzumrichter 21 der elektrischen Servomotoren. Gestrichelt ist bei 22 eine Kühlplatte oder Coldplate oder gekühlte Rückwand des Schaltschranks oder des oder der Frequenzumrichter 21 angedeutet. Stromab der Rückwand 22 führt der Neben-Temperier-Kreislauf 29 über einen beispielsweise als Drehmotor 18 ausgebildeten elektrischen Servomotor.

Als weitere mögliche Detailvariante ist in Fig. 2 angedeutet, dass vom Vorlauf 26 zwei Vorläufe 42 beispielsweise zu den Blasformen 3 abzweigen, und in den Rücklauf 27 zwei (oder ein gemeinsamer) Rückläufe 43 von den Blasformen 3 einmünden. Dies wäre eine optionale Kombination des Flüssigkeits-Temperiersystems T für funktionelle Ausstattungskomponenten 4 mit dem Primärfunktions-Temperiersystem der Blasformen.

Die elektrischen Verbindungen vom drehenden Teil 1 zum stehenden Teil 2 verlaufen beispielsweise über eine Schleifringanordnung 5a, die entweder mit der Drehdurchführung 5 kombiniert oder von dieser separat zwischen dem drehenden und dem stehenden Teil vorgesehen ist.

Ferner ist in Fig. 2 angedeutet, dass beispielsweise vom Vorlauf 26 im stehenden Teil 2 ein weiterer Vorlauf 44 abgezweigt ist, und ein weiterer Rücklauf 45 zum Rücklauf 27 führt. Dort kann wenigstens ein weiterer Temperier-Kreislauf für funktionelle Ausstattungskomponenten z.B. im stehenden Teil 2, angeschlossen sein, beispielsweise zum Temperieren eines Plattformbereichs des stehenden Teils 2 oder dort angeordneter, nicht gezeigter Servomotoren oder dergleichen. Wenigstens ein solcher, im stehenden Teil 2 angeordneter Temperierkreislauf des Flüssigkeits-Temperiersystems T kann ähnlich aufgebaut sein wie die gezeigten Temperierkreisläufe 28, 29 im drehenden Teil 1.

Die Ausführungsform des Flüssigkeits-Temperiersystems T für funktionelle Ausstattungskomponenten 4 von Sekundärfunktionen in Fig. 3 unterscheidet sich von der in Fig. 2 in mehrfacher Hinsicht. Zum einen ist das Flüssigkeits-Temperiersystem T im drehenden Teil 1 autark ausgebildet, d. h., auch das Klimagerät 24 ist mit Vorlauf und Rücklauf 26, 27 im drehenden Teil 1 untergebracht, und, gegebenenfalls über die Zentralsteuereinheit 25 elektrisch über die Drehdurchführung oder eine Schleifringanordnung 5a mit Versorgungsleitungen 40 im stehenden Teil 2 verbunden. Zum anderen ist im Haupttemperierkreislauf 28 am Knoten zwischen der Bypassverbindung 30 und dem Vorlauf 26 ein Dreiwege-Mischventil 31' vorgesehen, das durch den Stellmotor 32 betätigbar ist und die Strömungen im Vorlauf 26 und der Bypassverbindung 30 direkt steuert bzw. regelt. Ferner sind in dem Haupt-Temperierkreislauf 28 drei stellvertretend für eine Vielzahl von funktionellen Ausstattungskomponenten 4 parallel geschaltet, und in Serie mit dem Blasrad 1' bzw. dessen Heiz- oder Kühlstrecke 37. Im wenigstens einen Neben-Temperierkreislauf 29, der auf einem anderen Temperaturniveau betrieben werden kann als der Haupt-Temperierkreislauf 28, sind in der gezeigten Ausführungsform drei funktionelle Ausstattungskomponenten 4 in Reihe geschaltet, nämlich beispielsweise ein Schaltschrank oder eine elektronische oder elektrische Steuereinheit 20, ein Schaltschrank oder ein oder mehrere Frequenzumrichter 21, und schließlich stromab von diesen ein elektrischer Servomotor 4, der beispielsweise der Drehmotor oder der Linearmotor 18, 19 von Fig. 2 sein kann. Auch hier könnte der Nebentemperierkreislauf 29 eine ähnliche Ausstattung (Regelung) aufweisen wie der Haupttemperierkreislauf 28. Ferner könnte in nicht autarker Auslegung das Temperiergerät 24 im drehenden Teil 1 über die Drehdurchführung an eine Flüssigkeitsversorgung angeschlossen sein (nicht gezeigt).

Die Zirkulationspumpe 41 stromab des Dreiwege-Mischventils 31', wie auch dessen Stellmotor 32, werden hier beispielsweise von der Zentralsteuereinheit 25 gesteuert und/oder mit Betriebsspannung versorgt.

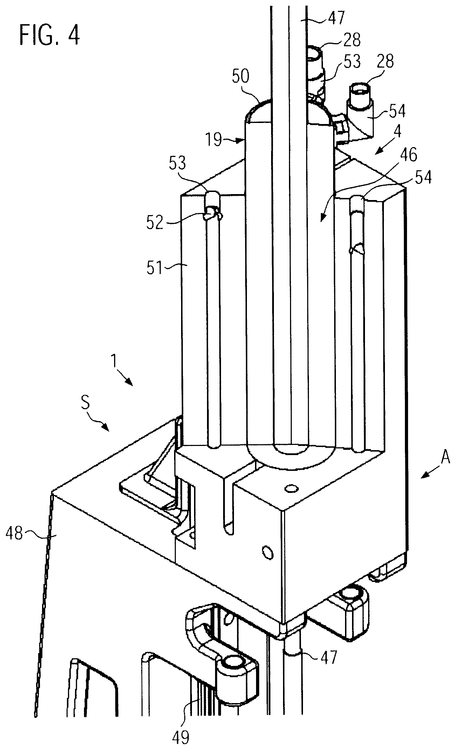

Fig. 4 zeigt ein konkretes Beispiel der Integration einer funktionellen Ausstattungskomponente 4 für Sekundärfunktionen in beispielsweise dem Haupttemperierkreislauf 28 von Fig. 2 oder 3, hier den Servo-Linearmotor 19, in einem Reckstangenantriebsystem A im drehenden Teil 1 und an einer Blasstation S der Blasmaschine B.

Der Linear-Servomotor 19 weist einen in der gezeigten Ausführungsform beispielsweise tubularen Stator 46 und einen darin zentral linear geführten Läufer 47 auf, der sich nach unten zu einer nicht gezeigten Reckstange bzw. einem Reckschlitten erstreckt. Der Servo-Linearmotor 19 ist auf einem Lagerbock 48 montiert, der beispielsweise eine Längsführung 49 für den Reckschlitten (nicht gezeigt) enthält. Der Stator 46 kann außen zusätzlich mit Kühlrippen ausgebildet sein, die flankierend durch eine gezielte Luftströmung mit kühler Luft beaufschlagbar sind. Im gezeigten Ausführungsbeispiel weist der Stator 46 einen Kühlmantel 50 mit Einlass- und Auslassanschlüssen 53, 54 auf, die beispielsweise an den Haupt-Temperierkreislauf 28 angeschlossen sind (siehe Fig. 2 oder 3). Im Mantel 50 und/oder Motor 46 sind entsprechende Kanäle geformt (nicht gezeigt), die die Flüssigkeit durchströmt.

In Fig. 4 ist der Servo-Linearmotor 19 in einem Kühlkörper 51 angeordnet, in welchem Kanäle 52 vorgesehen sind, die von der Flüssigkeit durchströmt werden, entweder von den Einlass- und Auslassanschlüssen 53, 54 des Mantels 50 her, oder über separate Einlass- und Auslassanschlüsse 54, 53 (strichpunktiert angedeutet). Auch der Kühlkörper 51 könnte mit Kühlrippen (nicht gezeigt) ausgestattet sein, die flankierend durch gezielte Luftströmung beaufschlagbar sind. Der Servo-Linearmotor 19 wird auf diese Weise entweder gekühlt, um die betriebsbedingt generierte Wärme abzuführen und ein vorbestimmtes Temperaturniveau zu halten, oder erwärmt, falls seine Temperatur zu niedrig sein sollte. Neben betriebsbedingt generierter Wärme kann auch durch Wärmeeinkopplung eingetragene Wärme abgeführt werden. Es können hier der Kühlmantel 50 und der Kühlkörper 51 verwendet werden oder nur einer davon. Wird zusätzlich mit gezielter Luftströmung gekühlt, kann diese vom stehenden Teil über Gebläse und/oder durch die Drehbewegung des drehenden Teils 1 erzeugt und gerichtet werden. Weiterhin könnte beim Blasprozess ausgestoßene und durch Expansion (oder Wärmetauscher) gekühlte Blasluft hierfür benutzt werden.

## Patentansprüche

1. Blasmaschine (B), insbesondere Streckblasmaschine, zum Herstellen von Behältern (F) aus temperierten Preforms (P) in über ein mit Flüssigkeit betriebenes Primärfunktions-Temperiersystem (6) temperierte Blasformen (3) aufweisenden Blasstationen (S), wobei zumindest den Blasstationen (S) zum Steuern und/oder Überwachen von Sekundär-Funktionen im Produktionsbetrieb funktionelle Ausstattungskomponenten (4), wie zumindest elektrische Servomotoren (18, 19), zugeordnet sind, **dadurch gekennzeichnet, dass** zum Temperieren zumindest einiger funktioneller Ausstattungskomponenten (4) für Sekundär-Funktionen ein aus wenigstens einem Temperiergerät (24) versorgtes, regelbares, elektrisch betriebenes Flüssigkeits-Temperiersystem (T) in die Blasmaschine (B) eingegliedert und über die funktionellen Ausstattungskomponenten (4) geführt ist.

2. Blasmaschine nach Anspruch 1, **dadurch gekennzeichnet, dass** das Flüssigkeits-Temperiersystem (T) für funktionelle Ausstattungskomponenten (4) der Sekundär-Funktionen mehrere kombinierte Temperierkreisläufe (28, 29) aufweist, und dass zumindest zwei der Temperierkreisläufe (28, 29) im Produktionsbetrieb der Blasmaschine (B) mit unterschiedlichen Temperaturniveaus betreibbar sind.

3. Blasmaschine nach Anspruch 1, **dadurch gekennzeichnet, dass** das Flüssigkeits-Temperiersystem (T) der funktionellen Ausstattungskomponenten (4) und das PrimärFunktions-Temperiersystem (6) der Blasformen (3) kombiniert sind.

4. Blasmaschine nach Anspruch 1, **dadurch gekennzeichnet, dass** die Blasmaschine (B) einen im Produktionsbetrieb stehenden Teil (2) und wenigstens einen relativ zum stehenden Teil (2) drehenden Teil (1) mit den Blasstationen (S) aufweist, vorzugsweise ein Blasrad (1'), und dass zu temperierenden, funktionellen Ausstattungskomponenten (4) zumindest der Blasstationen (S) gemeinsame Temperierkreisläufe (28, 29) des Flüssigkeits-Temperiersystems (T) zumindest im drehenden Teil (1) zugeordnet sind.

5. Blasmaschine nach wenigstens einem der vorhergehenden Ansprüche, **dadurch gekennzeichnet, dass** das Temperiergerät (24) außerhalb der Blasmaschine (B) oder im stehenden Teil (2) oder im drehenden Teil (1) angeordnet und mit den Temperierkreisläufen (28, 29) über einen Vorlauf (26) und einen Rücklauf (27) verbunden ist.

6. Blasmaschine nach Anspruch 4, **dadurch gekennzeichnet, dass** auch im stehenden Teil (2) der Blasmaschine (B) wenigstens ein Temperierkreislauf für funktionelle Ausstattungskomponenten des stehenden Teils (2) angeordnet und, vorzugsweise, an das Temperiergerät (24) oder Vorlauf und Rücklauf (26, 27) angeschlossen ist.

7. Blasmaschine nach Anspruch 5, **dadurch gekennzeichnet, dass** das außerhalb der Blasmaschine (B) oder im stehenden Teil (2) der Blasmaschine angeordnete Temperiergerät (24) über eine zwischen dem stehenden Teil (2) und dem drehenden Teil (1) angeordnete Drehdurchführung (5) für Vorlauf (26) und Rücklauf (27) mit dem zumindest einen Temperierkreislauf (28, 29) im drehenden Teil (1) verbunden ist, vorzugsweise, über eine zur Temperierung der Blasformen (3) vorgesehene Flüssigkeits-Drehdurchführung oder über eine Druckluft-Drehdurchführung oder über eine kombinierte Flüssigkeits/Druckluft-Drehdurchführung.

8. Blasmaschine nach wenigstens einem der vorhergehenden Ansprüche, **dadurch gekennzeichnet, dass** das einschließlich des Temperiergerätes (24) im drehenden Teil (1) angeordnete, allen funktionellen Ausstattungskomponenten (4) von Sekundär-Funktionen gemeinsame Flüssigkeits-Temperiersystem (T) bezüglich der Wärmeträgerflüssigkeit, z. B. Wasser oder Öl, autark ausgebildet und, vorzugsweise, über eine Schleifringanordnung (5a) zwischen drehendem Teil (2) und stehendem Teil (1) der Blasmaschine (B) zumindest mit elektrischer Betriebsspannung versorgt wird.

9. Blasmaschine nach wenigstens einem der vorhergehenden Ansprüche, **dadurch gekennzeichnet, dass** funktionelle Ausstattungskomponenten (4) für Sekundär-Funktionen neben elektrischen Servomotoren in Form von Frequenzumricht-Drehmotoren (18) und/oder -Linearmotoren (19) zumindest elektrische oder elektronische Steuereinrichtungen (20, 21) und/oder Gehäuse oder Schaltkästen für diese und/oder wenigstens ein Klimagerät (23) zur lokalen Zusatztemperierung der Flüssigkeit innerhalb des Temperierkreislaufs (28, 29) und/oder im Vorlauf (26) oder Rücklauf (27) und/oder Kühlelemente (22) wie Rückwandkühlkörper für Frequenzumrichter und/oder einen Plattformbereich im stehenden oder/und drehenden Teil (1, 2) und dgl. umfassen, die jeweils mit Einlass- und Auslassanschlüssen (53, 54) zum Installieren, vorzugsweise in Serie und/oder parallel, im jeweiligen Temperierkreislauf (28, 29) versehen sind.

10. Blasmaschine nach Anspruch 9, **dadurch gekennzeichnet, dass** Frequenzumrichter (20) und/oder Steuereinrichtungen (21) der Servomotoren von den Servomotoren baulich separiert entweder einzeln oder gruppenweise oder gemeinsam in wenigstens einen Temperierkreislauf (28, 29) eingegliedert sind.

11. Blasmaschine nach Anspruch 1, **dadurch gekennzeichnet, dass** flankierend zum Flüssigkeits-Temperiersystem (T) zumindest eine funktionelle Ausstattungskomponente (4) mit kühlender gezielter Luftströmung beaufschlagbar und/oder mit durch Luftströmung beaufschlagbaren Kühlmerkmalen wie Kühlrippen oder Coldplates ausgebildet ist, wobei, vorzugsweise, die jeweilige Luftströmung vom stehenden Teil (2) her und/oder durch die Drehbewegung des drehenden Teils (1) und/oder durch Zuleitung von in Blasstationen (S) im Produktionsbetrieb ausgestoßener, durch Expansion gekühlter Blasluft erzeugt und gerichtet wird.

12. Blasmaschine nach wenigstens einem der vorhergehenden Ansprüche, **dadurch gekennzeichnet, dass** zumindest in einem an Vorlauf und Rücklauf (26, 27) angeschlossenen Haupt-Temperierkreislauf (28) wenigstens eine Zirkulationspumpe (41), stromauf der Zirkulationspumpe (41) zwischen Vorlauf und Rücklauf eine Bypassverbindung (30) und im Vorlauf oder Rücklauf wenigstens ein elektrisch betätigbares Mischventil (31, 31') vorgesehen sind.

13. Blasmaschine nach Anspruch 12, **dadurch gekennzeichnet, dass** im Rücklauf (27) stromab der Bypassverbindung (30) ein Zweiwege-Mischventil (31) mit elektrischem Stellmotor (32) wie einem Stellmagneten oder dgl. angeordnet und zumindest über einen Temperaturgeber stromab der Zirkulationspumpe (41) angeordneten Temperatur- und/oder Druck- und/oder Strömungsraten-Sensor (33, 35, 36) steuerbar ist.

14. Blasmaschine nach Anspruch 12, **dadurch gekennzeichnet, dass** im Vorlauf (26) stromauf der Zirkulationspumpe (41) in einem Knoten zwischen Vorlauf und Bypassverbindung (30) ein Dreiwege-Mischventil (31') mit Stellmotor (32) angeordnet und über einen Temperatur- und/oder Druck- und/oder Strömungsraten-Sensor (33, 35, 36) steuerbar ist.

15. Blasmaschine nach Anspruch 12, **dadurch gekennzeichnet, dass** der Haupttemperierkreislauf (28) über wenigstens eine funktionelle Ausstattungskomponente (4), wie z. B. einen elektrischen Servomotor, und stromab davon über das Blasrad (1') verläuft, vorzugsweise über mehrere zum Temperieren in Reihe und/oder parallel geschaltete funktionelle Ausstattungskomponenten (4).

16. Blasmaschine nach Anspruch 15, **dadurch gekennzeichnet, dass** vom Haupttemperierkreislauf (28) stromab der Zirkulationspumpe (41) ein Nebentemperierkreislauf (29) zu wenigstens einem Schaltschrank, Kühlkörper; Servomotor oder Frequenzumrichter abzweigt, vorzugsweise zu mehreren parallel und/oder in Reihe geschalteten Schaltschränken, Kühlkörpern, Servomotoren oder Frequenzumrichtern.

17. Blasmaschine nach Anspruch 1, **dadurch gekennzeichnet, dass** das Flüssigkeits-Temperiergerät (T) wenigstens eine, vorzugsweise programmierbare, Zentralsteuereinheit (25) umfasst, und, vorzugsweise, wahlweise zum geregelten Kühlen oder Heizen betreibbar ist, wobei, vorzugsweise, die Zentralsteuereinheit (25) im stehenden Teil (2) oder außerhalb der Blasmaschine (B) angeordnet ist.

18. Blasmaschine nach Anspruch 1, **dadurch gekennzeichnet, dass** elektrische Servo-Linearmotoren (19) in Reckstangen-Direktantrieben (A) der Blasstationen (S) jeweils am Stator (46) einen Kühlmantel (50) mit Einlass- und Auslassanschlüssen (53, 54) zum Installieren in einem Temperierkreislauf (28, 29) aufweisen und/oder in den Blasstationen (S) auf oder in in einen Temperierkreislauf (28, 29) integrierten Kühlkörpern (51) montiert sind.

## Claims

1. A blowing machine (B), particularly stretch blow-molding machine, for manufacturing containers (F) from tempered preforms (P) in blowing stations (S) having tempered blow molds (3) tempered by a primary function tempering system (6) operating with liquid, wherein functional equipment components (4) such as electric servomotors (18, 19) to control and/or monitor secondary functions during production are assigned at least to said blowing stations (S), **characterized in that,** for tempering at least some functional equipment components (4) for secondary functions , an electrically operated controllable liquid tempering system (T) supplied by at least one tempering device (24) and extending over the functional equipment components (4) is integrated into the blowing machine (B).

2. The blowing machine according to claim 1, **characterized in that** the liquid tempering system (T) for functional equipment components (4) of the secondary functions includes multiple combined tempering circuits (28, 29), and that at least two of said tempering circuits (28, 29) can be operated at different temperature levels during production in the blowing machine (B).

3. The blowing machine according to claim 1, **characterized in that** the liquid tempering system (T) of the functional equipment components (4) and the primary function tempering system (6) of the blow molds (3) are combined.

4. The blowing machine according to claim 1, **characterized in that** the blowing machine (B) comprises a part (2) that is stationary during production and at least one part (1), including the blowing stations (S), rotating in relation to the stationary part (2), preferably a blowing wheel (1'), and **in that** tempering circuits (28, 29) of the liquid tempering system (T) are at least assigned in said rotating part (1) to functional equipment components (4) to be tempered.

5. The blowing machine according to at least one of the preceding claims, **characterized in that** the tempering device (24) is located outside said blowing machine (B) or in said stationary part (2) or in said rotating part (1) and is connected with said tempering circuits (28, 29) via a forward run (26) and a backward run (27).

6. The blowing machine according to claim 4, **characterized in that** at least one tempering circuit for functional equipment components of said stationary part (2) is also provided in the stationary part (2) of the blowing machine (B) and is, preferably, connected to said tempering device (24) or said forward and backward runs (26, 27).

7. The blowing machine according to claim 5, **characterized in that** the tempering device (24) arranged outside said blowing machine (B) or in said stationary part (2) of said blowing machine is connected to said at least one tempering circuit (28, 29) in said rotating part (1) via a rotary union (5) provided between said stationary part (2) and said rotating part (1) for said forward run (26) and said backward run (27), preferably via a liquid rotary union used to temper the blow molds (3) or via an air pressure rotary union or via a combined liquid/air pressure rotary union.

8. The blowing machine according to at least one of the preceding claims, **characterized in that** said liquid tempering system (T) arranged together with the tempering device (24) in said rotating part (1) and being common to all functional equipment components (4) of secondary functions is an autarkic stand-alone system with regard to the heat carrier liquid, e.g. water or oil, and preferably is supplied at least with electrical operating voltage via a collector ring arrangement (5a) provided between the rotating part (2) and the stationary part (1) of said blowing machine (B).

9. The blowing machine according to at least one of the preceding claims, **characterized in that** functional equipment components (4) for secondary functions comprise besides electric servomotors in the form of frequency-converting rotary motors (18) and/or linear motors (19) at least electric or electronic control assemblies (20, 21) and/or casings or control boxes for the same and/or at least one air conditioning device (23) for an additional local tempering control of the liquid in said tempering circuit (28, 29) and/or in said forward run (26) or said backward run (27) and/or cooling elements (22) such as rear wall cooling elements for frequency converters and/or a platform area in said stationary or/and rotating parts (1, 2) etc., each being provided with inlet and outlet ports (53, 54) for installation purposes, preferably in series and/or in parallel, in the corresponding tempering circuit (28, 29).

10. The blowing machine according to claim 9, **characterized in that** frequency converters (20) and/or control assemblies (21) of the servomotors are integrated into at least one tempering circuit (28, 29) in structurally separated manner either individually or in groups or in common.

11. The blowing machine according to claim 1, **characterized in that** in supporting manner to said liquid tempering system (T) at least one functional equipment component (4) can be impinged by a directed-on cooling air stream and/or is provided with cooling characteristics such as cooling ribs or cold plates onto which the air flow can impinge, wherein, preferably, the corresponding air flow is generated and directed from said stationary part (2) and/or through the rotating motion of said rotating part (1) and/or through the supply of expansion-cooled air blasts ejected from blowing stations (S) during production.

12. The blowing machine according to at least one of the preceding claims, **characterized in that** in at least in one major tempering circuit (28) connected to said forward and said backward runs (26, 27) at least one circulation pump (41) is provided, and that upstream of said circulation pump (41) between the forward run and the backward run one bypass connection (30), and in said forward run or backward run at least one electrically operable mixing valve (31, 31') is provided.

13. The blowing machine according to claim 12, **characterized in that** in said backward run (27) downstream of said bypass connection (30) a two-way mixing valve (31) with an electric actuator (32) such as an operating magnet or the like is provided that is controlled by a temperature signal emitter of at least one temperature and/or pressure and/or flow rate sensor (33, 35, 36) arranged in said tempering circuit downstream of said circulation pump (41).

14. The blowing machine according to claim 12, **characterized in that** a three-way mixing valve (31') with an actuator (32) is arranged in said forward run (26) upstream of said circulation pump (41) in a junction between the forward run and the bypass connection (30), the valve (31) being controlled via a temperature and/or pressure and/or flow rate sensor (33, 35, 36).

15. The blowing machine according to claim 12, **characterized in that** said major tempering circuit (28) extends via at least one functional equipment component (4) such as an electric servomotor, and downstream thereof via said blowing wheel (1'), preferably through multiple functional equipment components (4) connected for tempering either in series and/or in parallel.

16. The blowing machine according to claim 15, **characterized in that** an auxiliary tempering circuit (29) branches from said major tempering circuit (28) downstream of said circulation pump (41) towards at least one control box, cooling element, servomotor, or frequency converter, preferably towards multiple control boxes, cooling elements, servomotors, or frequency converters connected in parallel and/or in series.

17. The blowing machine according to claim 1, **characterized in that** said liquid tempering device (T) comprises at least one preferably programmable central control unit (25) and is optionally operable for controlled cooling or heating, said central control unit (25) preferably being arranged in said stationary part (2) or outside said blowing machine (B).

18. The blowing machine according to claim 1, **characterized in that** electric linear servo motors (19) in stretching bar direct drives (A) of said blowing stations (S) each comprise at a stator (46) a cooling jacket (50) with inlet and outlet ports (53, 54) for installation into a tempering circuit (28, 29) and/or are mounted in said blowing stations (S) onto or into cooling elements (51) integrated into a tempering circuit (28, 29).

## Revendications

1. Machine de moulage par soufflage (B), notamment machine de moulage par soufflage-étirage, pour la fabrication de contenants (F) à partir de préformes (P) mises en température, dans des postes de moulage par soufflage (S) présentant des moules de soufflage (3) mis en température par l'intermédiaire d'un système de mise en température de fonction primaire (6) fonctionnant avec un liquide, machine dans laquelle au moins aux postes de moulage par soufflage (S) sont associés, pour la commande et/ou la surveillance de fonctions secondaires en mode de fonctionnement de production, des composants d'équipement fonctionnels (4) tels qu'au moins des servomoteurs électriques (18, 19), **caractérisée en ce que** pour la mise en température d'au moins quelques composants d'équipement fonctionnels (4) pour des fonctions secondaires, un système de mise en température de liquide (T) fonctionnant électriquement, réglable et alimenté à partir d'au moins un appareil de mise en température (24), est intégré à la machine de moulage par soufflage (B) et mène à travers des composants d'équipement fonctionnels (4).

2. Machine de moulage par soufflage selon la revendication 1, **caractérisée en ce que** le système de mise en température de liquide (T) pour des composants d'équipement fonctionnels (4) de fonctions secondaires, présente plusieurs circuits de mise en température (28, 29) combinés, et **en ce qu'**au moins deux des circuit de mise en température (28, 29) peuvent fonctionner à des niveaux de température différents en mode de fonctionnement en production.

3. Machine de moulage par soufflage selon la revendication 1, **caractérisée en ce que** le système de mise en température de liquide (T) des composants d'équipement fonctionnels (4) et le système de mise en température de fonction primaire (6) des moules de soufflage (3), sont combinés.

4. Machine de moulage par soufflage selon la revendication 1, **caractérisée en ce que** la machine de moulage par soufflage (B) présente une partie (2) fixe en fonctionnement en mode de production, et au moins une partie tournante (1) rotative par rapport à la partie fixe (2) et comprenant les postes de moulage par soufflage (S), de préférence une roue de soufflage (1'), et **en ce qu'**à des composants d'équipement fonctionnels (4) à mettre en température au moins des postes de moulage par soufflage (S), sont associés des circuits de mise en température (28, 29) communs du système de mise en température de liquide (T) au moins dans la partie tournante (1).

5. Machine de moulage par soufflage selon l'une au moins des revendications précédentes, **caractérisée en ce que** l'appareil de mise en température (24) est agencé à l'extérieur de la machine de moulage par soufflage (B), ou bien dans la partie fixe (2) ou dans la partie tournante (1), et est relié aux circuits de mise en température (28, 29) par l'intermédiaire d'un système de conduite aller (26) et d'un système de conduite de retour (27).

6. Machine de moulage par soufflage selon la revendication 4, **caractérisée en ce que** dans la partie fixe (2) de la machine de moulage par soufflage (B) est également agencé au moins un circuit de mise en température destiné à des composants d'équipement fonctionnels de la partie fixe (2), et, de préférence, raccordé à l'appareil de mise en température (24) ou aux systèmes de conduite aller et de retour (26, 27).

7. Machine de moulage par soufflage selon la revendication 5, **caractérisée en ce que** l'appareil de mise en température (24) agencé à l'extérieur de la machine de moulage par soufflage (B) ou dans la partie fixe (2) de la machine de moulage par soufflage, est relié au dit au moins un circuit de mise en température (28, 29) dans la partie tournante (1), par l'intermédiaire d'un passage tournant (5) agencé entre la partie fixe (2) et la partie tournante (1), pour le système de conduite aller (26) et de retour (27), de préférence par l'intermédiaire d'un passage tournant pour liquide prévu pour la mise en température des moules de soufflage (3), ou bien par l'intermédiaire d'un passage tournant pour de l'air comprimé, ou bien par l'intermédiaire d'un passage tournant combiné liquide/air comprimé.

8. Machine de moulage par soufflage selon l'une au moins des revendications précédentes, **caractérisée en ce que** le système de mise en température de liquide (T) commun à tous les composants d'équipement fonctionnels (4) de fonctions secondaires, y compris l'appareil de mise en température (24), agencé dans la partie tournante (1), est conçu de manière autarcique quant au liquide caloporteur, par exemple de l'eau ou de l'huile, et est alimenté au moins en tension de fonctionnement électrique, de préférence par l'intermédiaire d'un agencement de bagues de frottement (5a) entre la partie tournante (2) et la partie fixe (1) de la machine de moulage par soufflage (B).

9. Machine de moulage par soufflage selon l'une au moins des revendications précédentes, **caractérisée en ce que** des composants d'équipement fonctionnels (4) pour fonctions secondaires comprennent, en-dehors de servomoteurs électriques sous la forme de moteurs rotatifs (18) et/ou moteurs linéaires (19) à variateur de fréquence, au moins des dispositifs de commande électrique ou électronique (20, 21), et/ou des boitiers ou armoires de commande pour ceux-ci, et/ou au moins un appareil de climatisation (23) pour une mise en température additionnelle locale du liquide à l'intérieur du circuit de mise en température (28, 29) et/ou dans le système de conduite aller (26) ou retour (27), et/ou des éléments de refroidissement (22) tels des corps de refroidissement de paroi arrière pour des variateurs de fréquence et/ou une zone de plateforme dans la partie fixe et/ou la partie tournante (1, 2), ou éléments similaires, qui sont chacun pourvus respectivement de raccords d'entrée et de sortie (53, 54) pour leur installation, de préférence en série et/ou en parallèle, dans le circuit de mise en température (28, 29) respectif.

10. Machine de moulage par soufflage selon la revendication 9, **caractérisée en ce que** des variateurs de fréquence (20) et/ou des dispositifs de commande (21) des servomoteurs sont intégrés de manière constructivement séparée des servomoteurs, soit individuellement ou par groupes, ou bien encore en commun, dans au moins un circuit de mise en température (28, 29).

11. Machine de moulage par soufflage selon la revendication 1, **caractérisée en ce qu'**en accompagnement au système de mise en température de liquide (T), au moins un composant d'équipement fonctionnel (4) peut être alimenté par un écoulement d'air de refroidissement ciblé et/ou peut être réalisé avec des caractéristiques de refroidissement telles que des ailettes de refroidissement ou des plaques de refroidissement pouvant être alimentées par un écoulement d'air, l'écoulement d'air respectivement considéré pouvant de préférence être produit et orienté à partir de la partie fixe (2) et/ou par le mouvement de rotation de la partie tournante (1) et/ou par l'amenée de l'air de soufflage évacué des postes de moulage par soufflage (S) en mode de fonctionnement de production et refroidi par détente.

12. Machine de moulage par soufflage selon l'une au moins des revendications précédentes, **caractérisée en ce que** sont prévues dans un circuit de mise en température principal (28) raccordé au système conduite aller et de retour (26, 27), au moins une pompe de circulation (41), une liaison de dérivation (30) en amont de la pompe de circulation (41) entre le système de conduite aller et de retour, et au moins une vanne de mélange (31, 31') pouvant être actionnée électriquement dans le système de conduite aller ou de retour.

13. Machine de moulage par soufflage selon la revendication 12, **caractérisée en ce que** dans le système de conduite de retour (27), en aval de la liaison de dérivation (30), est agencée une vanne de mélange à deux voies (31) avec moteur de réglage électrique (32) tel qu'un aimant de réglage ou similaire, qui peut être commandée au moins par l'intermédiaire d'un capteur de température agencé en aval de la pompe de circulation (41), en particulier par l'intermédiaire d'un détecteur de température et/ou de pression et/ou de débit (33, 35, 36).

14. Machine de moulage par soufflage selon la revendication 12, **caractérisée en ce que** dans le système de conduite aller (26), en amont de la pompe de circulation (41), au niveau d'un noeud entre le système de conduite aller et la liaison de dérivation (30), est agencée une vanne de mélange à trois voies (31') avec un moteur de réglage (32), qui peut être commandée par l'intermédiaire d'un détecteur de température et/ou de pression et/ou de débit (33, 35, 36).

15. Machine de moulage par soufflage selon la revendication 12, **caractérisée en ce que** le circuit de mise en température principal (28) s'étend de manière à passer par au moins un composant d'équipement fonctionnel (4), comme par exemple un servomoteur électrique, et en aval de celui-ci, par la roue de soufflage (1'), de préférence par plusieurs composants d'équipement fonctionnels (4) montés en série ou en parallèle pour la mise en température.

16. Machine de moulage par soufflage selon la revendication 15, **caractérisée en ce qu'**à partir du circuit de mise en température principal (28), en aval de la pompe de circulation (41), est dérivé un circuit de mise en température auxiliaire (29) vers au moins une armoire de commande, un corps de refroidissement, un servomoteur ou variateur de fréquence, de préférence vers plusieurs armoires de commande, corps de refroidissement, servomoteurs ou variateurs de fréquence montés en série ou en parallèle.

17. Machine de moulage par soufflage selon la revendication 1, **caractérisée en ce que** l'appareil de mise en température de liquide (T) comprend au moins une unité de commande centrale (25), de préférence programmable, et, de préférence, peut fonctionner sélectivement pour le refroidissement ou le réchauffement régulé, l'unité de commande centrale (25) étant de préférence agencée dans la partie fixe (2) ou à l'extérieur de la machine de moulage par soufflage (B).

18. Machine de moulage par soufflage selon la revendication 1, **caractérisée en ce que** des servomoteurs électriques linéaires (19) dans des entraînement directs de tiges d'étirage (A) des postes de moulage par soufflage (S), présentent chacun sur son stator (46), une enveloppe de refroidissement (50) avec des raccords d'entrée et de sortie (53, 54) pour l'installation dans un circuit de mise en température (28, 29), et/ou sont montés, dans les postes de moulage par soufflage (S), dans des corps de refroidissement (51) intégrés dans un circuit de mise en température (28, 29).
